# EUROPEAN PATENT SPECIFICATION

(11) **EP 1 048 874 B1**
(45) Date of publication and mention of the grant of the patent: **08.02.2006**
(21) Application number: 99830252.5
(22) Date of filing: 28.04.1999
(51) Int. Cl.: F16D 65/12

(54) **A disk for a disk brake**
Scheibe für eine Scheibenbremse
Disque pour frein à disque

(43) Date of publication of application: 02.11.2000
(73) Proprietor: Freni Brembo S.p.A., 24035 Curno (Bergamo) (IT)
(72) Inventor: Gotti, Giovanni, 24011 Almé (IT); Oberti, Luca, 24010 Lenna (Bergamo) (IT)
(74) Representative: Siniscalco, Fabio

(56) References cited:
- EP-A- 0 494 494
- EP-A- 0 521 754
- DE-A- 2 217 009
- DE-A- 2 837 634
- FR-A- 1 535 705
- US-A- 2 368 621
- US-A- 5 139 117
- US-A- 5 238 089
- PATENT ABSTRACTS OF JAPAN vol. 010, no. 105 (M-471), 19 April 1986 (1986-04-19) & JP 60 237234 A (SUMITOMO DENKI KOGYO KK), 26 November 1985 (1985-11-26)
- PATENT ABSTRACTS OF JAPAN vol. 016, no. 169 (M-1239), 23 April 1992 (1992-04-23) & JP 04 015328 A (FUKUSHIMA SEIKO KK), 20 January 1992 (1992-01-20)

## Description

The subject of the present invention is a disk for a disk brake.

A disk-brake disk of known type comprises, basically, a support bell for connection, for example, to the wheel hub of a vehicle. The braking band is fixed to the bell by means of a connecting projection and cooperates with callipers to perform the braking action on the vehicle.

As is known, these disks are subject to vibrations which translate into annoying whistling.
Possible solutions are knows from US 2 368 621, DE 22 17 009, DE 28 37 634, JP 60 237234, JP 04 015328, EP 0 494 494, FR 1 535 705, EP-0 521 754 and US 5 139 117.
The object of the present invention is to propose a disk for a disk brake of the type specified above, which has structural and functional characteristics such as to overcome the problems mentioned above in relation to the prior art.

This object is achieved by a disk of the type specified, which is characterized in that at least one braking surface of the braking band has at least one recess or groove which extends along a circle concentric with the axis of symmetry of the disk.

For a better understanding of the invention, a nonlimiting embodiment thereof is described below and illustrated in the appended drawings, in which:
Figure 1 is an axonometric view of a solid disk of the state of the art,
Figure 2 is a cross-section of the disk of Figure 1,
Figure 3 is an axonometric view of a self-ventilated disk,
Figure 4 is a side view of a detail of the disk of Figure 3,
Figure 5 shows a detail of a cross-section of a self-ventilated disk,
Figure 6 shows a second embodiment of a solid brake disk, in section,
Figure 7 is a side view of a detail of a braking band of a self-ventilated disk,
Figures 8 shows, in cross-section, a detail of a self-ventilated disk according to the state of the art and
Figures 9 and 10 show a view and a side view of a self-ventilated disk according the invention.

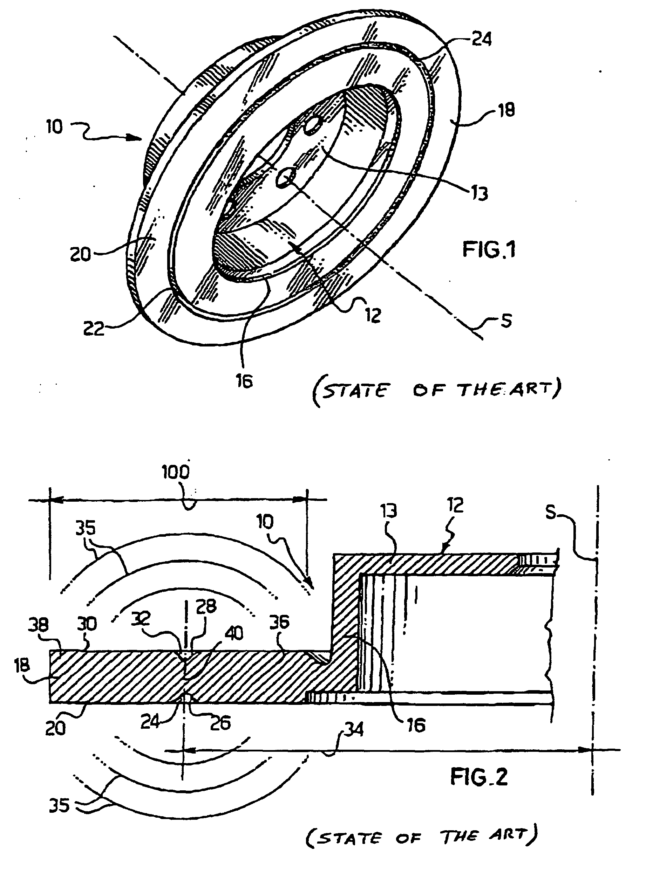

With reference to Figure 1, a disk-brake disk is generally indicated 10. The disk extends around an axis of symmetry, indicated (s) . In the centre of the disk 10 there is a bell 12. The bell can be coupled, for example, to a hub of a vehicle, by means of a bearing surface 13. A braking band 18 is supported by the bell 12 by means of a connecting projection 16.

At least one braking surface 20 of the braking band 18 advantageously has at least one recess 22 extending along a circle, indicated by a chain line 24. The circle 24 is arranged concentrically relative to the axis of symmetry (s) of the disk 10.

The recess 22 is annular, that is, it extends around a closed circle.

The braking surface of the band is interrupted by virtue of the presence of the recess 22.

Two channels or grooves 26 and 28 (Figure 2) may advantageously be provided in the braking band 18 of the disk 10- The channels 26, 28 are formed in the inner and outer braking surfaces 20 and 30 of the disk 10. The channels extend along circles 24 and 32 concentric with the axis of symmetry (s) of the disk. The circles 24 and 32 are preferably disposed the same distance 34 from the axis (s).

The provision of the channels 26, 28 interrupts the surfaces 20, 30 of the disk 10 which participate to the greatest extent in emitting sound waves 35. In particular, by virtue of the provision of the recess 22 or of the channels 26, 28 disposed along circles 24, 32 concentric with the axis of the disk 10, the braking band 18 is constituted by two rings 36 and 38 connected to one another by means of a bridge 40.

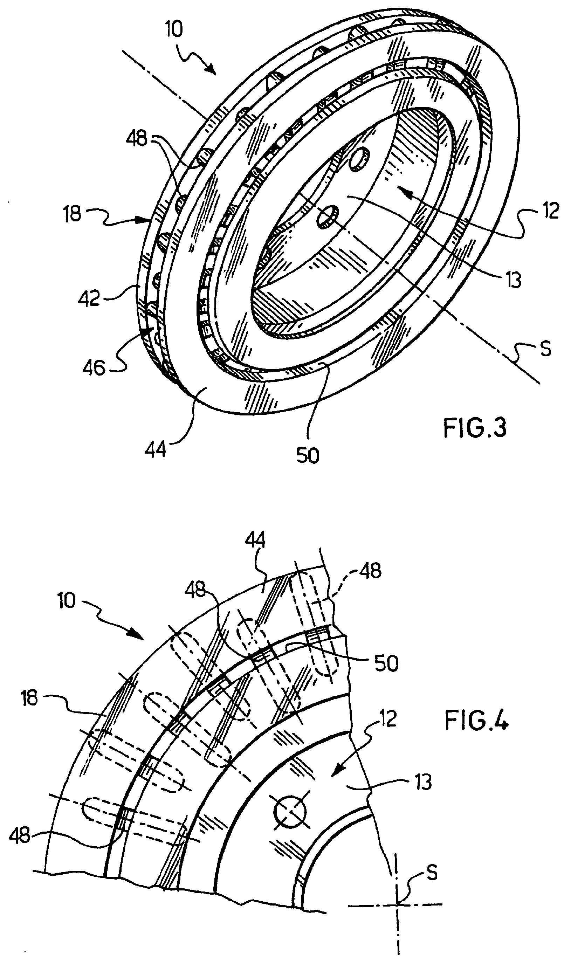

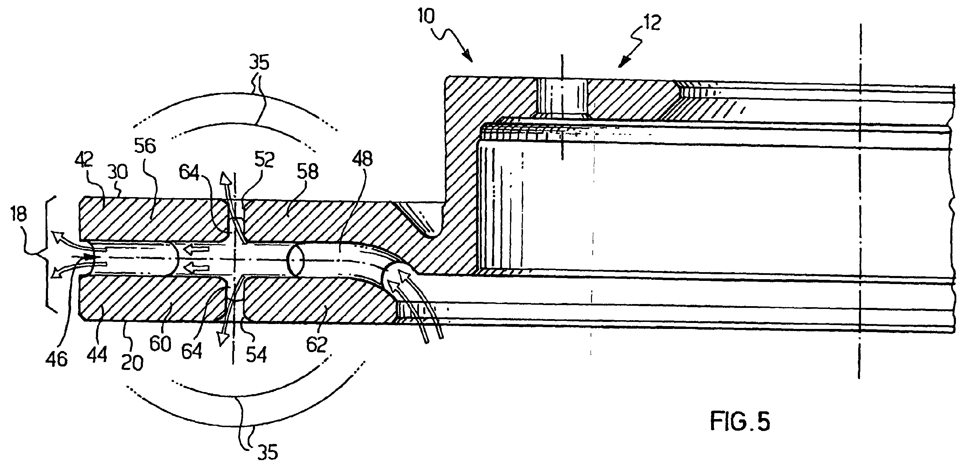

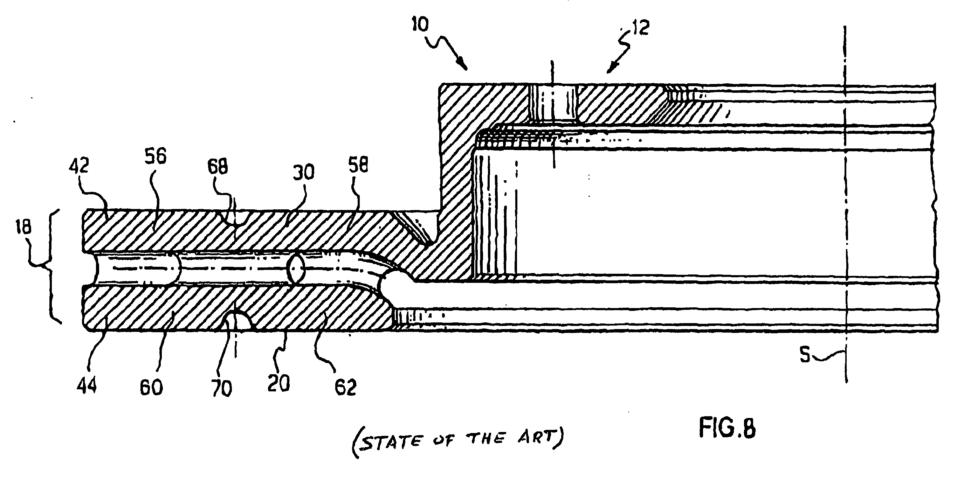

As can be seen from Figures 3 and 4, the disk 10 is advantageously self-ventilated. In this embodiment, the braking band 18 of the disk 10 comprises an outer plate 42 and an inner plate 44 disposed facing one another so as to form a space 46 for the outflow of air. The inner plate 44 is fixed to the outer plate 42 by spacers, for example, fins 48 shaped so as to define ventilation ducts.

Advantageously, at least one of the plates 42, 44 of the braking band 18 has a recess 50 which extends along a circle concentric with the axis of symmetry (s) of the disk 10.

The circle along which the recess or the channels extend interrupts the braking surface in a position disposed from 1/4 to 4/5 of the band width and, preferably, at 3/5 or 1/2 of the band width.

The recess provided in the braking surface constitutes a localized region of structural flexibility of the band 18 which permits unusually quiet braking. In particular, with the disk proposed, the emission of sound waves generated by the disk when it is stressed by a braking action is reduced.

In other words, the recess modifies the dynamic flexibility of the disk locally and the disk consequently adopts vibration modes with different frequencies in comparison with a disk of the same geometrical shape and mass but without the recess. The vibration modes are advantageously outside the frequency range usually excited during braking Since the fraguencies excited to the greatest extent during braking are within limited freguency ranges or intervals, by virtue of the provision of at least one recess in the braking surfaces of the disk, extending along a circle concentric with the axis of the disk, the frequencies of the principal vibration modes of the disk are outside the frequency ranges excited, rendering the disk unusually quiet.

As can be seen in Figure 5. The braking band 18 of a self-ventilated disk 10 has, in its surfaces 20, 30, lateral recesses 52, 54 of a depth equal to the thickness of the plates 42, 44. The recesses 52, 54 communicate with the ventilation ducts of the space 46, forming routes for the outflow of air laterally relative to the disk 10. The recesses 52, 54 divide the plates 42, 44 into two concentric rings, indicated 56 and 58 and 60, 62, respectively.

The braking band 18 is advantageously reinforced by the provision of connecting spacers, for example, small pillars 48 or pins, between the plates 42, 44. The pillars 48 interconnect the rings 56, 58, 60, 62 in the region of the space 46 and, by means of lateral extensions 64 which partially penetrate the recesses 52, 54, also in the region of the walls of the recesses 52, 54.

The operation of the disk 10 is described below with reference to Figures 2 and 5.

During braking, a vibration is induced in the disk 10 because of the action of the pads on the surfaces 20, 30 of the braking band 18.

This vibration of the disk 10 takes place in accordance with the disk's own modes of vibration which are modified, in comparison with a continuous band, by the presence of the recesses 22, 26 and 28 disposed along circles 24, 32. The band 18 is in fact broken up by the recesses into concentric rings 36, 38, 56, 58 and 60, 62. In particular, the action of the pads will, above all, drive vibrations in certain frequency ranges which are not significant vibration modes of the disk, These vibration modes of the disk 10, which are excited little or not at all, will emit sound waves 35 of low amplitude.

Clearly, variations and/or additions may be applied to the embodiments described above.

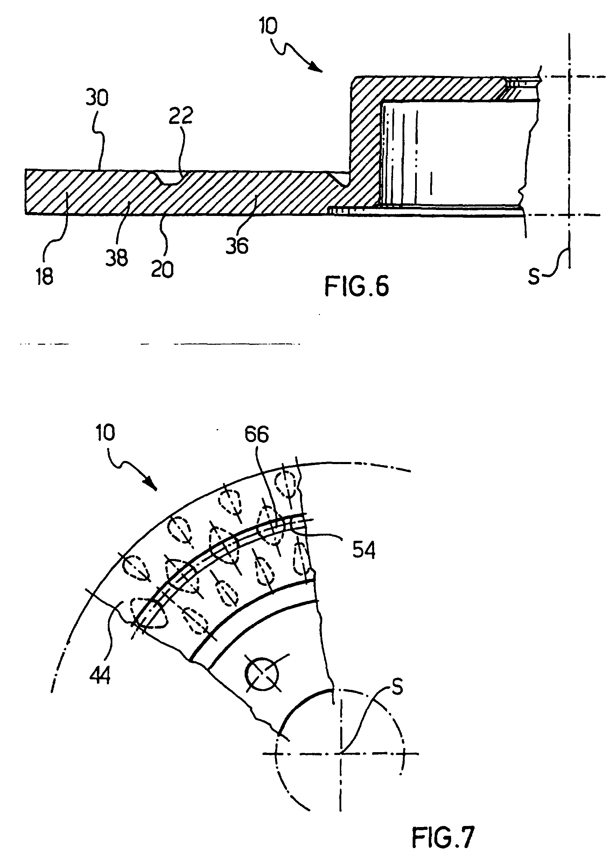

In the case of a solid disk 10, only one recess 22 may be provided disposed, for example, on the outer side 30 of the braking band 18 (Figure 6). As well as dividing the braking band 18 into two concentric rings 36, 38 in order to reduce the amplitude of the noise emitted by the disk, this embodiment also prevents the braking band from being deformed excessively towards the inner side 20 of the disk 10 in the event of large increases in temperature.

Naturally it will be necessary to provide for the use of pads which are unloaded in the region of the recess on both braking surfaces, even in the absence of a recess, so as to level out the wear of the pads.

Figure 7 shows a self-ventilated disk 10 having a circular recess 54. The disk 10 has its inner plate 44 fixed to its outer plate by means of small pillars 66, commonly known as pins.

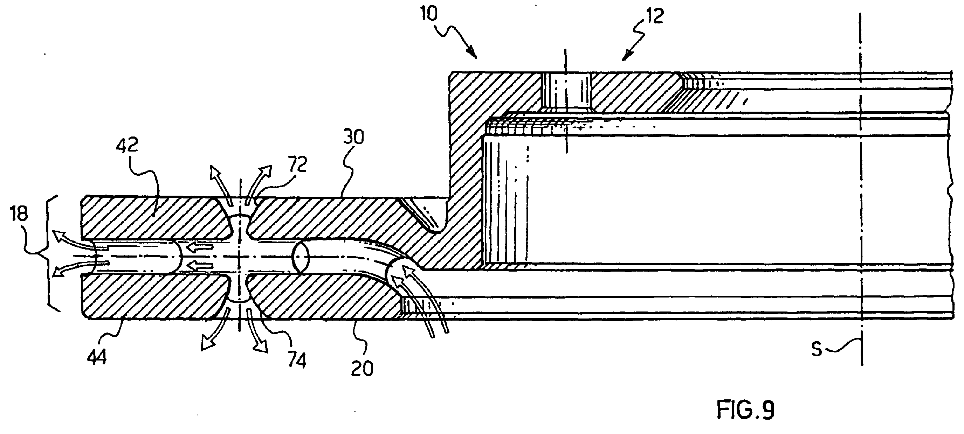

Figure 8 shows a self-ventilated disk 10 of the state of the art having channels 68, 70 extending in the thickness of the plates 42, 44.

As can be seen from Figure 9, a self-ventilated brake disk 10 has, in its plates 42, 44, recesses 72, 74 which extend along a circle concentric with the axis of symmetry (s). The recesses 72, 74 have a cross-section which diverges from the inner side to the outer side of the braking band 18. With further advantage, the cross-section of the recesses 72, 74 has a shaped profile. This particular shape of the cross-section of the recess favours a lateral outflow of air from the disk 10 as well as reducing the amplitude of the sound waves emitted by the disk 10.

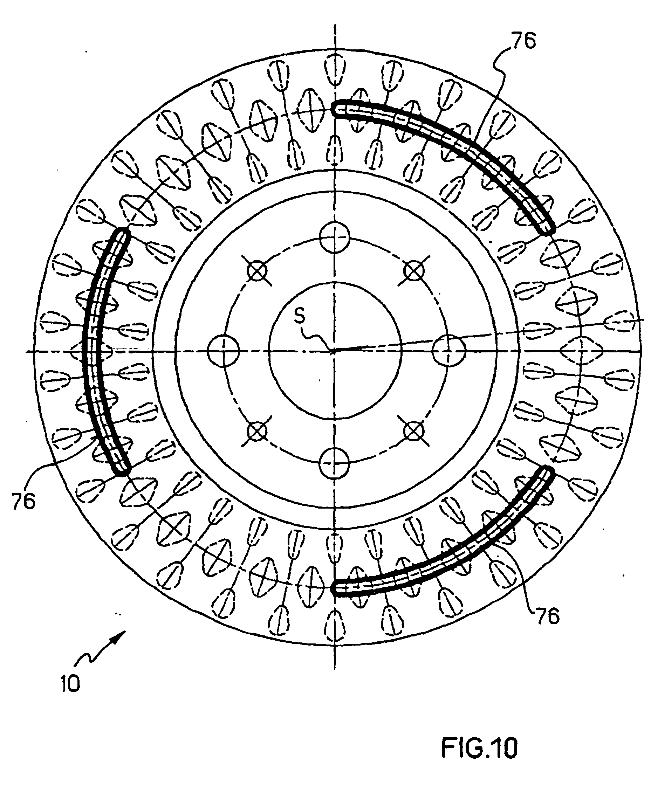

Figure 10 shows a further embodiment of the invention. A plurality of slots 76 advantageously extend along a circle concentric with the axis of symmetry (s) of the disk 10. The slots 76 are spaced apart uniformly so as not to unbalance the disk 10 during its rotation. This embodiment is particularly advantageous if the disk 10 has to be used for particularly heavy braking of a vehicle such as, for example, prolonged braking and braking from high speeds.

## Claims

1. A disk (10) for a disk brake, comprising a self-ventilated braking band (18), wherein at least one braking surface (20, 30) of the braking band (18) has at least one recess (50, 52, 54, 72, 74, 76) which extends along a circle (24, 32) concentric with the axis of symmetry (s) of the disk (10), said disk further comprising a ventilation duct of the braking band (18) the ventilation duct being delimited by spacers, and in which the recess (50, 52, 54, 72, 74, 76) has a depth equal to the thickness of the plate (42, 44),
**characterized in that** the recess (50, 52, 54, 72. 74, 76) has a cross-section which diverges from the inner side of the braking band (18) to its outer side.

2. A disk (10) according to Claim 1, in which the recess (22, 26, 28, 50, 52, 54, 68, 70, 72, 74) is annular.

3. A disk (10) according to Claim 1, in which the recess (50, 52, 54, 68, 70, 72, 74, 76) is provided in all of the plates (42, 44).

4. A disk (10) according to Claim 1, in which the recess (50, 52, 54, 68, 72, 74, 76) interrupts the braking band (18) in a position variable from 1/4 to 4/5 of the braking band (18) width (100).

5. A disk (10) according to Claim 4, in which the recess (50, 52, 54, 72, 74, 76) is provided at 3/5 of the braking band (18) width (100).

6. A disk (10) according to Claim 4, in which the recess (50, 52, 54, 72, 74, 76) is provided at 1/2 of the braking band (18) width (100).

7. A disk (10) according to any one of the preceding claims, in which the recess (76) is a slot.

8. A disk (10) according to Claim 1, in which the braking band (18) has a plurality of slots (76) which extend along a circle symmetrically with respect to the axis (s) of the disk (10) .

9. A disk (10) according to Claim 7, in which the braking band (18) has three slots (76) spaced uniformly around the circle.

## Patentansprüche

1. Scheibe (10) für eine Scheibenbremse, die ein selbstbelüftetes Bremsband (18) aufweist, wobei wenigstens eine Bremsfläche (20, 30) des Bremsbandes (18) wenigstens eine Ausnehmung (50, 52, 54, 72, 74, 76) aufweist, die sich entlang eines Kreises (24, 32) erstreckt, der mit der Symmetrieachse (s) der Scheibe konzentrisch ist, wobei die Scheibe des Weiteren einen Belüftungskanal des Bremsbandes (18) aufweist, wobei der Belüftungskanal durch Abstandshalter begrenzt ist, und wobei die Ausnehmung (50, 52, 54, 72, 74, 76) eine Tiefe aufweist, die gleich der Dicke der Platte (42, 44) ist,
**dadurch gekennzeichnet, dass** die Ausnehmung (50, 52, 54, 72, 74, 76) einen Querschnitt aufweist, der von der Innenseite des Bremsbandes (18) zu dessen Außenseite hin divergiert.

2. Scheibe (10) gemäß Anspruch 1, wobei die Ausnehmung (22, 26, 28, 50, 52, 54, 68, 70, 72, 74) ringförmig ist.

3. Scheibe (10) gemäß Anspruch 1, wobei die Ausnehmung (50, 52, 54, 68, 70, 72, 74, 76) in allen Platten (42, 44) vorgesehen ist.

4. Scheibe (10) gemäß Anspruch 1, wobei die Ausnehmung (50, 52, 54, 68, 70, 72, 74, 76) das Bremsband (18) in einer Position unterbricht, die von 1/4 bis 4/5 der Breite (100) des Bremsbandes (18) variabel ist.

5. Scheibe (10) gemäß Anspruch 4, wobei die Ausnehmung (50, 52, 54, 72, 74, 76) an 3/5 der Breite (100) des Bremsbandes (18) angeordnet ist.

6. Scheibe (10) gemäß Anspruch 4, wobei die Ausnehmung (50, 52, 54, 72, 74, 76) an 1/2 der Breite (100) des Bremsbandes (18) angeordnet ist.

7. Scheibe (10) gemäß einem der vorangehenden Ansprüche, wobei die Ausnehmung (76) ein Schlitz ist.

8. Scheibe (10) gemäß Anspruch 1, wobei das Bremsband (18) mehrere Schlitze (76) aufweist, die sich entlang eines Kreises erstrecken, der relativ zur Achse (s) der Scheibe (10) symmetrisch ist.

9. Scheibe (10) gemäß Anspruch 7, wobei das Bremsband (18) drei Schlitze (76) aufweist, die gleichmäßig um den Kreis herum angeordnet sind.

## Revendications

1. Disque (10) pour frein à disque, comprenant une piste de freinage (18) auto ventilée, dans lequel au moins une surface de freinage (20, 30) de la piste de freinage (18) possède au moins un évidement (50, 52, 54, 72, 74, 76) qui s'étend le long d'un cercle (24, 32) concentrique à l'axe de symétrie (s) du disque (10), ledit disque comprenant en outre un conduit de ventilation de la piste de freinage (18), le conduit de ventilation étant délimité par des pièces d'écartement, et dans lequel l'évidement (50, 52, 54, 72, 74, 76) a une profondeur égale à l'épaisseur de la plaque (42, 44),
**caractérisé en ce que** l'évidement (50, 52, 54, 72, 74, 76) a une section transversale qui diverge en partant de l'intérieur de la piste de freinage (18) vers son côté extérieur.

2. Disque (10) selon la revendication 1, dans lequel l'évidement (22, 26, 28, 50, 52, 54, 68, 70, 72, 74) est annulaire.

3. Disque (10) selon la revendication 1, dans lequel l'évidement (50, 52, 54, 68, 70, 72, 74, 76) est disposé dans toutes les plaques (42, 44).

4. Disque (10) selon la revendication 1, dans lequel l'évidement (50, 52, 54, 72, 74, 76) interrompt la piste de freinage (18) dans une position qui varie entre ¼ et 4/5 de la largeur (100) de la piste de freinage (18).

5. Disque (10) selon la revendication 4, dans lequel l'évidement (50, 52, 54, 72, 74, 76) est disposé à 3/5 de la largeur (100) de la piste de freinage (18).

6. Disque (10) selon la revendication 4, dans lequel l'évidement (50, 52, 54, 72, 74, 76) est disposé à ½ de la largeur (100) de la piste de freinage (18).

7. Disque (10) selon l'une quelconque des revendications précédentes, dans lequel l'évidement (76) est une rainure.

8. Disque (10) selon la revendication 1, dans lequel la piste de freinage (18) possède une pluralité de rainures (76) qui s'étendent le long d'un cercle en étant symétriques par rapport à l'axe (s) du disque (10).

9. Disque (10) selon la revendication 7, dans lequel la piste de freinage (18) possède trois rainures (76) qui sont réparties uniformément autour du cercle.
